# EUROPEAN PATENT SPECIFICATION

(11) **EP 2 882 234 B1**
(45) Date of publication and mention of the grant of the patent: **08.02.2017**
(21) Application number: 14196326.4
(22) Date of filing: 04.12.2014
(51) Int. Cl.: H04W 52/02

(54) **Method, apparatus, equipment and system for controlling turn-on and turn-off of wireless network**
Verfahren, Vorrichtung, Ausrüstung und System zur Steuerung des Ein- und Ausschaltens eines drahtlosen Netzwerks
Procédé, dispositif, équipement et système pour commander la mise en marche et l'arrêt de réseau sans fil

(30) Priority: 06.12.2013 CN 201310656096
(43) Date of publication of application: 10.06.2015
(73) Proprietor: Xiaomi Inc., Beijing 100085 (CN)
(72) Inventor: Gao, Yuan, 100085 Haidian District (CN); Zhang, Bin, 100085 Haidian District (CN); Li, Jinchao, 100085 Haidian District (CN)
(74) Representative: Sadler, Peter Frederick

(56) References cited:
- EP-A1- 2 282 588
- EP-A1- 2 432 270
- WO-A1-2011/088194
- WO-A1-2012/127279
- US-A1- 2012 093 053
- US-A1- 2013 137 411

## Description

### TECHNICAL FIELD

The present disclosure generally relates to the field of electronic technology, and more particularly, to a method, an apparatus, a device and a system for controlling turn-on and turn-off of a wireless network.

### BACKGROUND

With the development of mobile terminals such as smart phones, tablet PCs, e-book readers and ultrabooks, the wireless local area network (WLAN) has also been widely applied. In general, the WLAN is set up by adopting WIFI.

In the WLAN set up by adopting WIFI, a wireless router is often used as a wireless access device or equipment. For ease of use, the wireless access devices are generally in a long-term turn-on state. If it is needed to turn off the wireless access device, a user needs to manually control a power switch on the wireless access device to turn it off. When it is needed to turn on the wireless access device again, the user needs to manually control the power switch on the wireless access device to turn it on.

During the implementation of the present disclosure, at least the following problems in the background art are found by the inventor: if the wireless access device is in the long-term turn-on state, it will consume more energy; while if the wireless access device is turned on only by the user's manual operation, the user needs to manually switch on or off the power of the wireless access equipment frequently, which complicates the operation and shortens the lifespan of the wireless access device.

PCT application WO 2011/088194 describes an automation system for energy management in a wireless network in which a central controller receives network interface messages corresponding to events occurring within the network. The central controller analyzes the network interface message and controls network resources to implement power management parameters for adjusting the power consumptions of the network resources. PCT application WO 2012/127279 describes a method for switching cells within a wireless communication network. Upon detecting that at least one trigger condition is satisfied within a mobile terminal a message is transmitted requesting that a base station be turned on. The trigger conditions are based upon operating conditions of the mobile terminal detected at the mobile device.

### SUMMARY

The invention is defined in the independent claims to which reference is now directed. Preferred features are set out in the dependent claims.

In order to solve the problem of consuming more energy due to the long-term turn-on state of the wireless access device, and the problem of complicated operation and lifespan shortening of the wireless access device due to frequently switching on or off the power of the wireless access device manually, the embodiments of the present disclosure provide a method, an apparatus, a device and a system for controlling turn-on and turn-off of a wireless network. The technical solutions are as follows.

According to a first aspect of embodiments of the present disclosure, there is provided a method for controlling turn-on and turn-off of the wireless network in a mobile terminal that can directly communicate with the wireless access device via the wireless network when the wireless network is turned on, and can communicate with the wireless access device via a different network when the wireless network is turned off" the method including:
acquiring an operating parameter of the wireless network provided by a wireless access device;
determining whether the operating parameter satisfies a predetermined switching condition; and
controlling the wireless access device to turn on or turn off the wireless network if it is determined that the operating parameter satisfies the predetermined switching condition.

The determining whether the operating parameter satisfies the predetermined switching condition includes:
determining whether a current running time length of the wireless network reaches a predefined turn-off time length, if the operating parameter is the current running time length;
determining whether a current turn-off time length of the wireless network reaches a predefined turn-on time length, if the operating parameter is the current turn-off time length;
determining whether a current running time of the wireless network is the same as a predefined turn-off time, if the operating parameter is the current running time;
determining whether a current turn-off time of the wireless network is the same as a predefined turn-on time, if the operating parameter is the current turn-off time;
determining whether a total data flow rate value of the wireless network within a predetermined time period reaches a data flow rate turn-off threshold value, if the operating parameter is the total data flow rate value;
determining whether a total power consumption value of the wireless network within a predetermined time period reaches a power consumption turn-off threshold value, if the operating parameter is the total power consumption value; and
determining whether an instantaneous data flow rate value of the wireless network within a predetermined time period is continuously smaller than an instantaneous turn-off threshold value, if the operating parameter is the instantaneous data flow rate value.

Acquiring the operating parameter of the wireless network provided by the wireless access device includes:
receiving the operating parameter of the wireless network sent by the wireless access device.

Controlling the wireless access device to turn on or turn off the wireless network includes:
sending a turn-on or turn-off command to the wireless access device, the turn-on command being configured to trigger the wireless access device to turn on the wireless network, and the turn-off command being configured to trigger the wireless access device to turn off the wireless network.

In combination with the first aspect or the first possible implementation of the first aspect, in a second possible implementation, the controlling the wireless access device to turn off the wireless network includes:
detecting whether there is still a mobile terminal connected with the wireless access device via the wireless network every predetermined time interval, when it is determined that the operating parameter satisfies a turn-off condition in the predetermined switching condition; and
controlling the wireless access device to turn off the wireless network and to be shut down, when it is detected that there is no mobile terminal connected with the wireless access device.

According to a second aspect of embodiments of the present disclosure, there is provided a mobile terminal for controlling turn-on and turn-off of a wireless network, mobile terminal being configured to directly communicate with the wireless access device via the wireless network when the wireless network is turned on, and to communicate with the wireless access device via a different network when the wireless network is turned off, the mobile terminal including:
a parameter acquiring module configured to acquire an operating parameter of the wireless network provided by a wireless access device;
a condition determination module configured to determine whether the operating parameter satisfies a predetermined switching condition; and
a switching control module configured to control the wireless access device to turn on or turn off the wireless network if it is determined that the operating parameter satisfies the predetermined switching condition.

The condition determination module includes at least one of a first determination unit, a second determination unit, a third determination unit, a fourth determination unit, a fifth determination unit, a sixth determination unit and a seventh determination unit,
the first determination unit is configured to determine whether a current running time length of the wireless network reaches a predefined turn-off time length, if the operating parameter is the current running time length,
the second determination unit is configured to determine whether a current turn-off time length of the wireless network reaches a predefined turn-on time length, if the operating parameter is the current turn-off time length,
the third determination unit is configured to determine whether a current running time of the wireless network is the same as a predefined turn-off time, if the operating parameter is the current running time,
the fourth determination unit is configured to determine whether a current turn-off time of the wireless network is the same as a predefined turn-on time, if the operating parameter is the current turn-off time,
the fifth determination unit is configured to determine whether a total data flow rate value of the wireless network within a predetermined time period reaches a data
flow rate turn-off threshold value, if the operating parameter is the total data flow rate value,
the sixth determination unit is configured to determine whether a total power consumption value of the wireless network within a predetermined time period reaches a power consumption turn-off threshold value, if the operating parameter is the total power consumption value, and
the seventh determination unit is configured to determine whether an instantaneous data flow rate value of the wireless network within a predetermined time period is continuously smaller than an instantaneous turn-off threshold value, if the operating parameter is the instantaneous data flow rate value.

The parameter acquiring module is configured to receive the operating parameter of the wireless network sent by the wireless access device.

The switching control module is configured to send a turn-on or turn-off command to the wireless access device, the turn-on command being configured to trigger the wireless access device to turn on the wireless network, and the turn-off command being configured to trigger the wireless access device to turn off the wireless network.

In combination with the second aspect or the first possible implementation of the second aspect, in a second possible implementation, the switching control module includes:
a connectivity detection unit configured to detect whether there is still a mobile terminal connected with the wireless access device via the wireless network every predetermined time interval, when it is determined that the operating parameter satisfies a turn-off condition in the predetermined switching condition; and
a shut-down control unit configured to control the wireless access device to turn off the wireless network and to be shut down, when it is detected that there is no mobile terminal connected with the wireless access device

The mobile terminal may include:
one or more processors;
a memory; and
the modules are software modules stored in the memory and being configured to be executed by the one or more processors.

According to a third aspect of embodiments of the present disclosure, there is provided a system for controlling turn-on and turn-off of a wireless network, the system including at least one mobile terminal according to the second aspect and at least one wireless access device.

According to a sixth aspect of embodiments of the present disclosure, there is provided a program product having stored therein instructions that, when executed by one or more processors of a mobile terminal cause the mobile terminal to perform the steps of the first aspect.

Some advantageous effects brought out by the technical solutions provided by the embodiments of the present disclosure may include:
the present disclosure acquires the operating parameter of the wireless network provided by the wireless access device, determines whether the operating parameter satisfies the predetermined switching condition, and controls the wireless access device to turn on or turn off the wireless network if it is determined that the operating parameter satisfies the predetermined switching condition, thereby solving the problem of consuming more energy due to the long-term turn-on state of the wireless access device, and the problem of complicated operation and lifespan shortening of the wireless access device due to frequently switching on or off the power of the wireless access device manually, and achieving the effects of saving energy, having no need to manually turn on or turn off the power of the wireless access device, reducing the operational complexity, and elongating the lifespan of the wireless access device.

It is to be understood that both the foregoing general description and the following detailed description are exemplary and explanatory only and are not restrictive of the scope of protection, which is defined by the claims.

### BRIEF DESCRIPTION OF THE DRAWINGS

In order to clearly explain the embodiments of the present disclosure, hereinafter, the introduction to the drawings required to be used in the depiction of the embodiments will be given simply. It is apparent that the following drawings only illustrate some of the embodiments of the present disclosure.
Fig. 1 is an exemplary structural diagram of an implementation environment involved in a method for controlling turn-on and turn-off of a wireless network, according to an exemplary embodiment;
Fig. 2 is an exemplary method flow chart of a method for controlling turn-on and turn-off of a wireless network, according to an exemplary embodiment;
Fig. 3 is an exemplary method flow chart of a method for controlling turn-on and turn-off of the wireless network, according to an exemplary embodiment;
Fig. 4 is an exemplary method flow chart of a method for controlling turn-on and turn-off of the wireless network, according to an exemplary embodiment;
Fig. 5 is an exemplary structural diagram of an apparatus for controlling turn-on and turn-off of the wireless network, according to an exemplary embodiment;
Fig. 6 is an exemplary structural diagram of an apparatus for controlling turn-on and turn-off of the wireless network, according to an exemplary embodiment; and
Fig. 7 is an exemplary structural diagram of a mobile terminal, according to an exemplary embodiment.

Specific embodiments in this disclosure have been shown by way of example in the foregoing drawings and are hereinafter described in detail. The figures and written description are not intended to limit the scope of protection, which is defined in the claims. Rather, they are provided to illustrate the inventive concepts to a person skilled in the art with reference to particular embodiments.

### DETAILED DESCRIPTION

In order to make the purposes, technical solutions and advantages of the present disclosure more apparent, the embodiments of the present disclosure will be further described in detail with reference to the accompanying drawings.

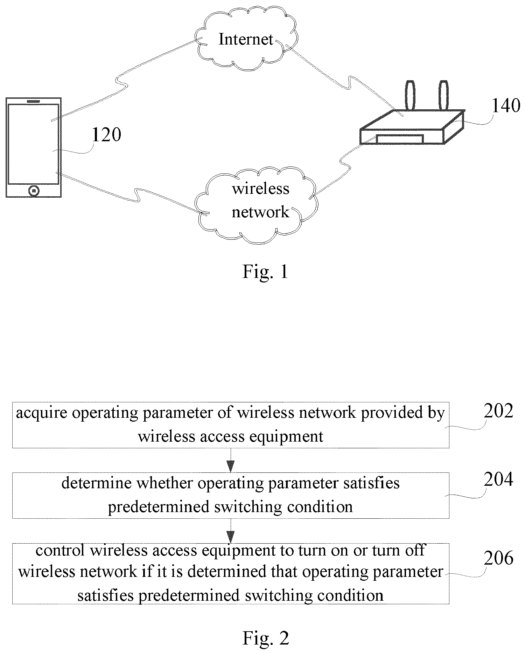

Referring to Fig. 1, which illustrates a structural diagram of an implementation environment involved in a method for controlling turn-on and turn-off of a wireless network provided by respective embodiments of the present disclosure, the implementation environment includes at least one mobile terminal 120 and a wireless access device 140.

The mobile terminal 120 may be a smart phone, a tablet PC, an e-book reader, a MP3 (Moving Picture Experts Group Audio Layer III) player, a MP4 (Moving Picture Experts Group Audio Layer IV) player, a portable laptop computer, a desktop computer, and so on.

The wireless access device 140 may be a router and the like.

The mobile terminal 120 and the wireless access device 140 may be connected via the wireless network, or may be connected via other networks such as the Internet, and can transmit information to each other. When the wireless network provided by the wireless access device 140 is turned on, the mobile terminal 120 can communicate directly with the wireless access device 140 via the wireless network; and when the wireless network provided by the wireless access device 140 is turned off, the mobile terminal 120 may communicate with the wireless access device 140 via other networks except the wireless network. The other networks may be a mobile communication network (for example, a 2/3/4G mobile communication network such as GSM, CDMA, GSM/CDMA, WCDMA, UMTS or LTE), the Internet, a combination of the mobile communication network and the Internet, and so on.

Referring to Fig. 2, which illustrates a method flow chart of a method for controlling turn-on and turn-off of a wireless network provided by one embodiment of the present disclosure, the present embodiment is mainly explained by using an example in which the method for controlling turn-on and turn-off of the wireless network is applied in the mobile terminal or the wireless access device shown in Fig. 1. The method for controlling turn-on and turn-off of the wireless network may include the following steps.

In step 202, an operating parameter of the wireless network provided by the wireless access device is acquired.

In step 204, whether the operating parameter satisfies a predetermined switching condition is determined.

In step 206, the wireless access device is controlled to turn on or turn off the wireless network if it is determined that the operating parameter satisfies the predetermined switching condition.

In summary, the method for controlling turn-on and turn-off of the wireless network provided by the present embodiment acquires the operating parameter of the wireless network provided by the wireless access device, determines whether the operating parameter satisfies the predetermined switching condition, and controls the wireless access device to turn on or turn off the wireless network if it is determined that the operating parameter satisfies the predetermined switching condition, thereby solving the problem of consuming more energy due to the long-term turn-on state of the wireless access device, and the problem of complicated operation and lifespan shortening of the wireless access device due to frequently switching on or off the power of the wireless access device manually, and achieving the effects of saving energy, having no need to manually turn on or turn off the power of the wireless access device, reducing the operational complexity, and elongating the lifespan of the wireless access device.

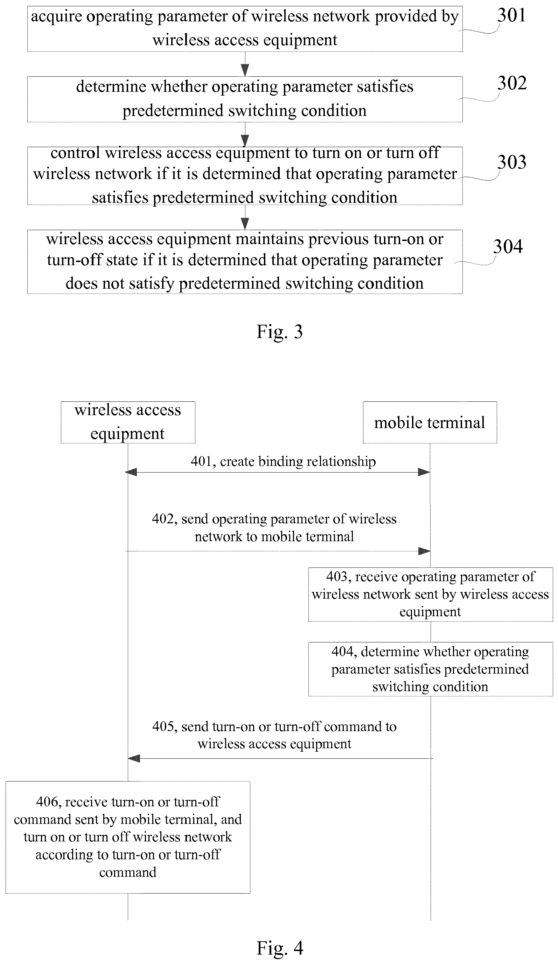

Referring to Fig. 3, which illustrates a method flow chart of a method for controlling turn-on and turn-off of the wireless network provided by another embodiment of the present disclosure, the present embodiment is mainly explained by using an example in which the method for controlling turn-on and turn-off of the wireless network is applied in the wireless access device shown in Fig. 1. The method for controlling turn-on and turn-off of the wireless network may include the following steps.

In step 301, an operating parameter of the wireless network provided by the wireless access device is acquired.

The wireless access device acquires an operating parameter of the wireless network, and the operating parameter of the wireless network includes at least one of a current running time length of the wireless network, a current running time of the wireless network, a current turn-off time of the wireless network, a total flow rate value of the wireless network within a predetermined time period, a total power consumption value of the wireless network within a predetermined time period, and an instantaneous flow rate value of the wireless network within a predetermined time period.

For example, if the operating parameter of the wireless network is the current running time of the wireless network, the wireless access device acquires the current running time of the wireless network through a timing device.

In step 302, whether the operating parameter satisfies a predetermined switching condition is determined.

The wireless access device determines whether the operating parameter satisfies a predetermined switching condition.

The predetermined switching condition includes a turn-on condition and a turn-off condition, wherein the turn-on condition includes any one of the following cases: the current turn-off time length of the wireless network reaches a predefined turn-on time length, and the current turn-off time of the wireless network is the same as a predefined turn-on time.

The turn-off condition includes any one of the following cases: the current running time length of the wireless network reaches a predefined turn-off time length, the current running time of the wireless network is the same as a predefined turn-off time, the total flow rate value of the wireless network within a predetermined time period reaches a flow rate turn-off threshold value, the total power consumption value of the wireless network within a predetermined time period reaches a power consumption turn-off threshold value, and the instantaneous flow rate value of the wireless network within a predetermined time period is continuously smaller than an instantaneous turn-off threshold value.

This step includes but is not limited to the following seven cases:

In the first case, if the operating parameter is the current running time length of the wireless network, whether the current running time length reaches a predefined turn-off time length is determined.

For example, the predefined turn-off time length is 12 hours.

In the second case, if the operating parameter is the current turn-off time length of the wireless network, whether the current turn-off time length reaches a predefined turn-on time length is determined.

For example, the predefined turn-on time length is 6 hours.

In the third case, if the operating parameter is the current running time of the wireless network, whether the current running time is the same as a predefined turn-off time is determined.

For example, on the assumption that the current running time of the wireless network acquired by the timing device is 24 o'clock, whether there is a predefined turn-off time, which is the same as the current running time 24 o'clock of the wireless network, in a predefined time list stored in a memory is determined.

In the fourth case, if the operating parameter is the current turn-off time of the wireless network, whether the current turn-off time is the same as a predefined turn-on time is determined.

For example, on the assumption that the current turn-off time of the wireless network acquired by the timing device is 6 o'clock, whether there is a predefined turn-on time, which is the same as the current turn-off time 6 o'clock of the wireless network, in a predefined time list stored in a memory is determined.

In the fifth case, if the operating parameter is the total flow rate value of the wireless network within a predetermined time period, whether the total flow rate value reaches a flow rate turn-off threshold value is determined.

For example, the flow rate turn-off threshold value is 200Mb/24 hours.

In the sixth case, if the operating parameter is the total power consumption value of the wireless network within a predetermined time period, whether the total power consumption value reaches a power consumption turn-off threshold value is determined.

For example, the power consumption turn-off threshold value is 200W

In the seventh case, if the operating parameter is the instantaneous flow rate value of the wireless network within a predetermined time period, whether the instantaneous flow rate value is continuously smaller than an instantaneous turn-off threshold value is determined.

For example, the instantaneous turn-off threshold value is: being continuously smaller than 50Kbps within 1 hour.

In step 303, the wireless access device is controlled to turn on or turn off the wireless network if it is determined that the operating parameter satisfies the predetermined switching condition.

When it is determined that the operating parameter satisfies the predetermined switching condition, the wireless access device turns on or turns off the wireless network.

This step includes but is not limited to the following seven cases:

In the first case, if it is determined that the current running time length of the wireless network reaches the predefined turn-off time length, the wireless access device turns off the wireless network.

In the second case, if it is determined that the current turn-off time length of the wireless network reaches the predefined turn-on time length, the wireless access device turns on the wireless network.

In the third case, if it is determined that the current running time of the wireless network is the same as the predefined turn-off time, the wireless access device turns off the wireless network.

For example, on the assumption that the predefined turn-off time 24 o'clock is in the predefined time list in a register of the wireless access device, and the current running time of the wireless network acquired by the timing device is 24 o'clock, when determining that there is a predefined turn-off time, which is the same as the current running time 24 o'clock of the wireless network, in the predefined time list, the wireless access device turns off the wireless network.

In the fourth case, if it is determined that the current turn-off time of the wireless network is the same as the predefined turn-on time, the wireless access device turns on the wireless network.

For example, on the assumption that the predefined turn-on time 6 o'clock is in the predefined time list in the register of the wireless access device, and the current turn-off time of the wireless network acquired by the timing device is 6 o'clock, when determining that there is a predefined turn-on time, which is the same as the current turn-off time 6 o'clock of the wireless network, in the predefined time list, the wireless access device turns on the wireless network.

In the fifth case, if it is determined that the total flow rate value of the wireless network within a predetermined time period reaches the flow rate turn-off threshold value, the wireless access device turns off the wireless network.

In the sixth case, if it is determined that the total power consumption value of the wireless network within a predetermined time period reaches the power consumption turn-off threshold value, the wireless access device turns off the wireless network.

In the seventh case, if it is determined that the instantaneous flow rate value of the wireless network within a predetermined time period is continuously smaller than an instantaneous turn-off threshold value, the wireless access device turns off the wireless network.

It should be explained additionally that, when it is determined that the operating parameter satisfies the turn-off condition in the predetermined switching condition, whether there is still a mobile terminal connected with the wireless access device via the wireless network is detected every predetermined time interval; and when it is detected that there is no mobile terminal connected with the wireless access, the wireless access device may be controlled to turn off the wireless network and to be shut down.

The turn-off condition includes any one of the following cases: the current running time length of the wireless network reaches a predefined turn-off time length, the current running time of the wireless network is the same as a predefined turn-off time, the total flow rate value of the wireless network within a predetermined time period reaches a flow rate turn-off threshold value, the total power consumption value of the wireless network within a predetermined time period reaches a power consumption turn-off threshold value, and the instantaneous flow rate value of the wireless network within a predetermined time period is continuously smaller than an instantaneous turn-off threshold value.

In step 304, if it is determined that the operating parameter does not satisfy the predetermined switching condition, the wireless access device maintains the previous turn-on or turn-off state.

In summary, the method for controlling turn-on and turn-off of the wireless network provided by the present embodiment acquires the operating parameter of the wireless network provided by the wireless access device, determines whether the operating parameter satisfies the predetermined switching condition, and controls the wireless access device to turn on or turn off the wireless network if it is determined that the operating parameter satisfies the predetermined switching condition, thereby solving the problem of consuming more energy due to the long-term turn-on state of the wireless access device, and the problem of complicated operation and lifespan shortening of the wireless access device due to frequently switching on or off the power of the wireless access device manually, and achieving the effects of saving energy, having no need to manually turn on or turn off the power of the wireless access device, reducing the operational complexity, and elongating the lifespan of the wireless access device.

In addition, the method for controlling turn-on and turn-off of the wireless network may detect whether there is still a mobile terminal connected with the wireless access device through the wireless network every predetermined time interval, and controls the wireless access device to turn off the wireless network and to be shut down when it is detected that there is no mobile terminal connected with the wireless access device, thereby achieving the effects of being able to turn off the wireless access device when there is no mobile terminal connected with the wireless access device, thus saving electric energy and reducing radiation.

Referring to Fig. 4, which illustrates a method flow chart of a method for controlling turn-on and turn-off of the wireless network provided by another embodiment of the present disclosure, the present embodiment is mainly explained by using an example in which the method for controlling turn-on and turn-off of the wireless network is applied in the implementation environment shown in Fig. 1 and is mainly implemented by the mobile terminal. The method for controlling turn-on and turn-off of the wireless network may include the following steps.

In step 401, a binding relationship is created.

A binding relationship is created between a mobile terminal and a wireless access device. The mobile terminal and the wireless access device may be bound, or associated with one another, in advance via a password or other manners, and the mobile terminal stores the name, IP address, or other information of the wireless access device. Information may be transferred between the mobile terminal and the wireless access device via the wireless network or other networks such as the Internet.

That is, the mobile terminal or the wireless access device receives the information sent by the wireless access device or the mobile device bound thereto, and the information may be an operating parameter of the wireless network, or may be a turn-on or turn-off command. When the wireless network is turned on, the mobile terminal can directly communicate with the wireless access device via the wireless network; and when the wireless network is turned off, the mobile terminal can communicate with the wireless access device via other networks, for example, the mobile terminal sends a short message carrying the turn-on or turn-off command to the wireless access device. The other networks may be a mobile communication network (for example, a 2/3/4G mobile communication network such as GSM, CDMA, GSM/CDMA, WCDMA, UMTS or LTE), the Internet, a combination of the mobile communication network and the Internet, and so on.

In step 402, the operating parameter of the wireless network is sent to the mobile terminal.

The wireless access device sends the operating parameter of the wireless network to the mobile terminal. The operating parameter of the wireless network includes at least one of a current running time length of the wireless network, a current running time of the wireless network, a current turn-off time of the wireless network, a total flow rate value of the wireless network within a predetermined time period, a total power consumption value of the wireless network within a predetermined time period, and an instantaneous flow rate value of the wireless network within a predetermined time period.

The wireless access device may send the operating parameter of the wireless network to the mobile terminal at predetermined time intervals.

In step 403, the operating parameter of the wireless network sent by the wireless access device is received.

The mobile terminal receives the operating parameter of the wireless network sent by the wireless access device.

In step 404, whether the operating parameter satisfies a predetermined switching condition is determined.

The mobile terminal determines whether the operating parameter satisfies a predetermined switching condition.

The predetermined switching condition includes a turn-on condition and a turn-off condition, wherein the turn-on condition includes any one of the following cases: the current turn-off time length of the wireless network reaches a predefined turn-on time length, and the current turn-off time of the wireless network is the same as a predefined turn-on time.

The turn-off condition includes any one of the following cases: the current running time length of the wireless network reaches a predefined turn-off time length, the current running time of the wireless network is the same as a predefined turn-off time, the total flow rate value of the wireless network within a predetermined time period reaches a flow rate turn-off threshold value, the total power consumption value of the wireless network within a predetermined time period reaches a power consumption turn-off threshold value, and the instantaneous flow rate value of the wireless network within a predetermined time period is continuously smaller than an instantaneous turn-off threshold value.

This step includes but is not limited to the following seven cases:

In the first case, if the operating parameter is the current running time length of the wireless network, the mobile terminal determines whether the current running time length reaches a predefined turn-off time length.

For example, the predefined turn-off time length is 12 hours.

In the second case, if the operating parameter is the current turn-off time length of the wireless network, the mobile terminal determines whether the current turn-off time length reaches a predefined turn-on time length.

For example, the predefined turn-on time length is 6 hours.

In the third case, if the operating parameter is the current running time of the wireless network, the mobile terminal determines whether the current running time is the same as a predefined turn-off time.

For example, on the assumption that the current running time of the wireless network acquired by the timing device of the wireless access device is 24 o'clock, the mobile terminal determines whether there is a predefined turn-off time, which is the same as the current running time 24 o'clock of the wireless network, in a predefined time list stored in a memory.

In the fourth case, if the operating parameter is the current turn-off time of the wireless network, the mobile terminal determines whether the current turn-off time is the same as a predefined turn-on time.

For example, on the assumption that the current turn-off time of the wireless network acquired by the timing device of the wireless access device is 6 o'clock, the mobile terminal determines whether there is a predefined turn-on time, which is the same as the current turn-off time 6 o'clock of the wireless network, in a predefined time list stored in a memory.

In the fifth case, if the operating parameter is the total flow rate value of the wireless network within a predetermined time period, the mobile terminal determines whether the total flow rate value reaches a flow rate turn-off threshold value.

For example, the flow rate turn-off threshold value is 200Mb/24 hours.

In the sixth case, if the operating parameter is the total power consumption value of the wireless network within a predetermined time period, the mobile terminal determines whether the total power consumption value reaches a power consumption turn-off threshold value.

For example, the power consumption turn-off threshold value is 200W

In the seventh case, if the operating parameter is the instantaneous flow rate value of the wireless network within a predetermined time period, the mobile terminal determines whether the instantaneous flow rate value is continuously smaller than an instantaneous turn-off threshold value.

For example, the instantaneous turn-off threshold value is: being continuously smaller than 50Kbps within 1 hour.

In step 405, the turn-on or turn-off command is sent to the wireless access device.

The mobile terminal sends the turn-on or turn-off command to the wireless access device. The turn-on command is configured to trigger the wireless access device to turn on the wireless network, and the turn-off command is configured to trigger the wireless access device to turn off the wireless network. When the wireless network provided by the wireless access device is turned on, the mobile terminal directly sends the turn-off command to the wireless access device via the wireless network; and when the wireless network provided by the wireless access device is turned off, the mobile terminal sends the turn-on command to the wireless access device via other networks except the wireless network. The other networks may be a mobile communication network (for example, a 2/3/4G mobile communication network such as GSM, CDMA, GSM/CDMA, WCDMA, UMTS or LTE), the Internet, a combination of the mobile communication network and the Internet, and so on.

This step includes but not limited to the following seven cases:

In the first case, if it is determined that the current running time length of the wireless network reaches the predefined turn-off time length, the mobile terminal sends the turn-off command to the wireless access device.

In the second case, if it is determined that the current turn-off time length of the wireless network reaches the predefined turn-on time length, the mobile terminal sends the turn-on command to the wireless access device.

In the third case, if it is determined that the current running time of the wireless network is the same as the predefined turn-off time, the mobile terminal sends the turn-off command to the wireless access device.

For example, on the assumption that the predefined turn-off time 24 o'clock is in the predefined time list in the register of the mobile terminal, and the current running time of the wireless network acquired by the timing device is 24 o'clock, when detecting that there is a predefined turn-off time, which is the same as the current running time 24 o'clock of the wireless network, in the predefined time list, the mobile terminal sends the turn-off command to the wireless access device.

In the fourth case, if it is determined that the current turn-off time of the wireless network is the same as the predefined turn-on time, the mobile terminal sends the turn-on command to the wireless access device.

For example, on the assumption that the predefined turn-on time 6 o'clock is in the predefined time list in a register of the mobile terminal, and the current turn-off time of the wireless network acquired by the timing device is 6 o'clock, when detecting that there is a predefined turn-on time, which is the same as the current turn-off time 6 o'clock of the wireless network, in the predefined time list, the mobile terminal sends the turn-on command to the wireless access device.

In the fifth case, if it is determined that the total flow rate value of the wireless network within a predetermined time period reaches the flow rate turn-off threshold value, the mobile terminal sends the turn-off command to the wireless access device.

In the sixth case, if it is determined that the total power consumption value of the wireless network within a predetermined time period reaches the power consumption turn-off threshold value, the mobile terminal sends the turn-off command to the wireless access device.

In the seventh case, if it is determined that the instantaneous flow rate value of the wireless network within a predetermined time period is continuously smaller than an instantaneous turn-off threshold value, the mobile terminal sends the turn-off command to the wireless access device.

In step 406, the turn-on command or the turn-off command sent by the mobile terminal is received, and the wireless network is turned on or turned off according to the turn-on command or turn-off command.

The wireless access device receives the turn-on command or the turn-off command sent by the mobile terminal, and turns on or turns off the wireless network according to the turn-on command or turn-off command.

It should be explained additionally that, when it is determined that the operating parameter satisfies the turn-off condition in the predetermined switching condition, whether there is still a mobile terminal connected with the wireless access device through the wireless network is detected at predetermined time intervals; and when it is detected that there is no mobile terminal connected with the wireless access device, the wireless access device is controlled to turn off the wireless network and to be shut down.

The turn-off condition includes any one of the following cases: the current running time length of the wireless network reaches a predefined turn-off time length, the current running time of the wireless network is the same as a predefined turn-off time, the total flow rate value of the wireless network within a predetermined time period reaches a flow rate turn-off threshold value, the total power consumption value of the wireless network within a predetermined time period reaches a power consumption turn-off threshold value, and the instantaneous flow rate value of the wireless network within a predetermined time period is continuously smaller than an instantaneous turn-off threshold value.

In summary, the method for controlling turn-on and turn-off of the wireless network provided by the present embodiment receives the operating parameter of the wireless network sent by the wireless access device, determines whether the operating parameter satisfies the predetermined switching condition, and sends the turn-on command or turn-off command to the wireless access device, thereby solving the problem of consuming more energy due to the long-term turn-on state of the wireless access device, and the problem of complicated operation and lifespan shortening of the wireless access device due to frequently switching on or off the power of the wireless access device manually, and achieving the effects of being able to control the wireless access device to turn on or turn off the wireless network by the mobile terminal, having no need to manually turn on or turn off the power of the wireless access device, reducing the operational complexity, elongating the lifespan of the wireless access device, and saving energy.

In addition, the method for controlling turn-on and turn-off of the wireless network detects whether there is still a mobile terminal connected with the wireless access device through the wireless network every predetermined time interval, and controls the wireless access device to turn off the wireless network and to be shut down when it is detected that there is no mobile terminal connected with the wireless access device, thereby achieving the effects of being able to turn off the wireless access device when there is no mobile terminal connected with the wireless access device, thus saving electric energy and reducing radiation.

Hereinafter, the device embodiments of the present disclosure will be described. For the details not depicted particularly, the above corresponding method embodiments may be referred to.

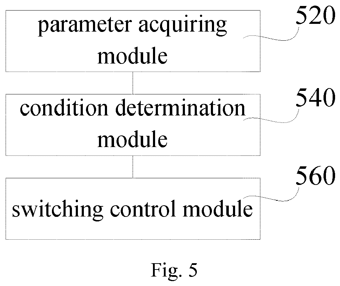

Referring to Fig. 5, which illustrates a structural diagram of an apparatus for controlling turn-on and turn-off of the wireless network provided by one embodiment of the present disclosure, the apparatus for controlling turn-on and turn-off of the wireless network may constitute all or a part of the mobile terminal or the wireless access device by software, hardware or a combination thereof. The apparatus for controlling turn-on and turn-off of the wireless network includes a parameter acquiring module 520, a condition determination module 540, and a switching control module 560.

The parameter acquiring module 520 is configured to acquire an operating parameter of the wireless network provided by the wireless access device.

The condition determination module 540 is configured to determine whether the operating parameter acquired by the parameter acquiring module 520 satisfies a predetermined switching condition.

The switching control module 560 is configured to control the wireless access device to turn on or turn off the wireless network if the condition determination module 540 determines that the operating parameter satisfies the predetermined switching condition.

In summary, the apparatus for controlling turn-on and turn-off of the wireless network provided by the present embodiment acquires the operating parameter of the wireless network provided by the wireless access device, determines whether the operating parameter satisfies the predetermined switching condition, and controls the wireless access device to turn on or turn off the wireless network if it is determined that the operating parameter satisfies the predetermined switching condition, thereby solving the problem of consuming more energy due to the long-term turn-on state of the wireless access device, and the problem of complicated operation and lifespan shortening of the wireless access device due to frequently switching on or off the power of the wireless access device manually, and achieving the effects of saving energy, having no need to manually turn on or turn off the power of the wireless access device, reducing the operational complexity, and elongating the lifespan of the wireless access device.

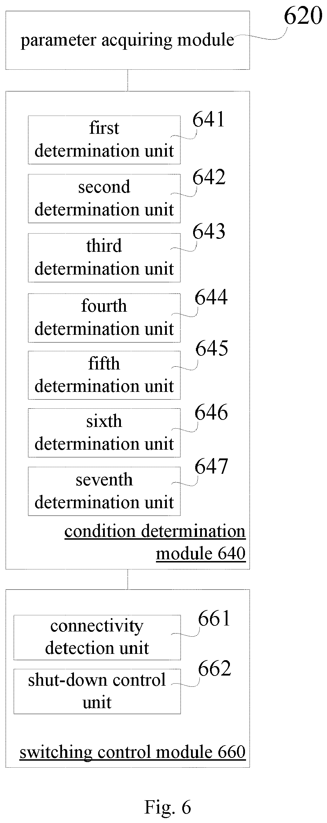

Referring to Fig. 6, which illustrates a structural diagram of an apparatus for controlling turn-on and turn-off of the wireless network provided by another embodiment of the present disclosure, the apparatus for controlling turn-on and turn-off of the wireless network may constitute all or a part of the wireless access device by software, hardware or a combination thereof. The apparatus for controlling turn-on and turn-off of the wireless network includes a parameter acquiring module 620, a condition determination module 640, and a switching control module 660.

The parameter acquiring module 620 is configured to acquire an operating parameter of the wireless network provided by the wireless access device.

The condition determination module 640 is configured to determine whether the operating parameter acquired by the parameter acquiring module 620 satisfies a predetermined switching condition.

The switching control module 660 is configured to control the wireless access device to turn on or turn off the wireless network if the condition determination module 640 determines that the operating parameter satisfies the predetermined switching condition.

The condition determination module 640 includes at least one of a first determination unit 641, a second determination unit 642, a third determination unit 643, a fourth determination unit 644, a fifth determination unit 645, a sixth determination unit 646 and a seventh determination unit 647.

The first determination unit 641 is configured to determine whether a current running time length of the wireless network reaches a predefined turn-off time length, if the operating parameter is the current running time length.

The second determination unit 642 is configured to determine whether a current turn-off time length of the wireless network reaches a predefined turn-on time length, if the operating parameter is the current turn-off time length.

The third determination unit 643 is configured to determine whether a current running time of the wireless network is the same as a predefined turn-off time, if the operating parameter is the current running time.

The fourth determination unit 644 is configured to determine whether a current turn-off time of the wireless network is the same as a predefined turn-on time, if the operating parameter is the current turn-off time.

The fifth determination unit 645 is configured to determine whether a total flow rate value of the wireless network within a predetermined time period reaches a flow rate turn-off threshold value, if the operating parameter is the total flow rate value.

The sixth determination unit 646 is configured to determine whether a total power consumption value of the wireless network within a predetermined time period reaches a power consumption turn-off threshold value, if the operating parameter is the total power consumption value.

The seventh determination unit 647 is configured to determine whether an instantaneous flow rate value of the wireless network within a predetermined time period is continuously smaller than an instantaneous turn-off threshold value, if the operating parameter is the instantaneous flow rate value.

The switching control module 660 includes a connectivity detection unit 661 and a shut-down control unit 662.

The connectivity detection unit 661 is configured to detect whether there is still a mobile terminal connected with the wireless access device via the wireless network every predetermined time interval, when it is determined that the operating parameter satisfies the turn-off condition in the predetermined switching condition.

The shut-down control unit 662 is configured to control the wireless access device to turn off the wireless network and to be shut down, when it is detected that there is no mobile terminal connected with the wireless access device.

If the apparatus for controlling turn-on and turn-off of the wireless network is applied in the mobile terminal, the parameter acquiring module 620 is configured to receive the operating parameter of the wireless network sent by the wireless access device.

If the apparatus for controlling turn-on and turn-off of the wireless network is applied in the mobile terminal, the switching control module 660 is configured to send a turn-on command or a turn-off command to the wireless access device, wherein the turn-on command is configured to trigger the wireless access device to turn on the wireless network, and the turn-off command is configured to trigger the wireless access device to turn off the wireless network.

In summary, the apparatus for controlling turn-on and turn-off of the wireless network provided by the present embodiment acquires the operating parameter of the wireless network provided by the wireless access device, determines whether the operating parameter satisfies the predetermined switching condition, and controls the wireless access device to turn on or turn off the wireless network if it is determined that the operating parameter satisfies the predetermined switching condition, thereby solving the problem of consuming more energy due to the long-term turn-on state of the wireless access device, and the problem of complicated operation and lifespan shortening of the wireless access device due to frequently switching on or off the power of the wireless access device manually, and achieving the effects of saving energy, having no need to manually turn on or turn off the power of the wireless access device, reducing the operational complexity, and elongating the lifespan of the wireless access device.

In addition, the apparatus for controlling turn-on and turn-off of the wireless network detects whether there is still a mobile terminal connected with the wireless access device through the wireless network every predetermined time interval, and controls the wireless access device to turn off the wireless network and to be shut down when it is detected that there is no mobile terminal connected with the wireless access device, thereby achieving the effects of being able to turn off the wireless access device when there is no mobile terminal connected with the wireless access device, thus saving electric energy and reducing radiation.

Another embodiment of the present disclosure provides a mobile terminal which may include: one or more processors; a memory; and one or more modules stored in the memory and being configured to be executed by the one or more processors, the one or more modules having the following functions: acquiring an operating parameter of a wireless network provided by a wireless access device; determining whether the operating parameter satisfies a predetermined switching condition; and controlling the wireless access device to turn on or turn off the wireless network if it is determined that the operating parameter satisfies the predetermined switching condition.

Yet another embodiment of the present disclosure provides a wireless access device which may include: one or more processors; a memory; and one or more modules stored in the memory and being configured to be executed by the one or more processors, the one or more modules having the following functions: acquiring an operating parameter of a wireless network provided by the wireless access device; determining whether the operating parameter satisfies a predetermined switching condition; and controlling the wireless access device to turn on or turn off the wireless network if it is determined that the operating parameter satisfies the predetermined switching condition.

Yet another embodiment of the present disclosure provides a system for controlling turn-on and turn-off of a wireless network, the system for controlling turn-on and turn-off of the wireless network may include at least one mobile terminal and at least one wireless access device, the at least one mobile terminal and the at least one wireless access device are connected via the wireless network; the mobile terminal may be any one of the above mentioned mobile terminal; and the wireless access device may be any one of the above mentioned wireless access device.

Still another embodiment of the present disclosure provides a program product having stored therein instructions that, when executed by one or more processors of a mobile terminal or a wireless access device, cause the mobile terminal or the wireless access device to perform: acquiring an operating parameter of a wireless network provided by the wireless access device; determining whether the operating parameter satisfies a predetermined switching condition; and controlling the wireless access device to turn on or turn off the wireless network if it is determined that the operating parameter satisfies the predetermined switching condition.

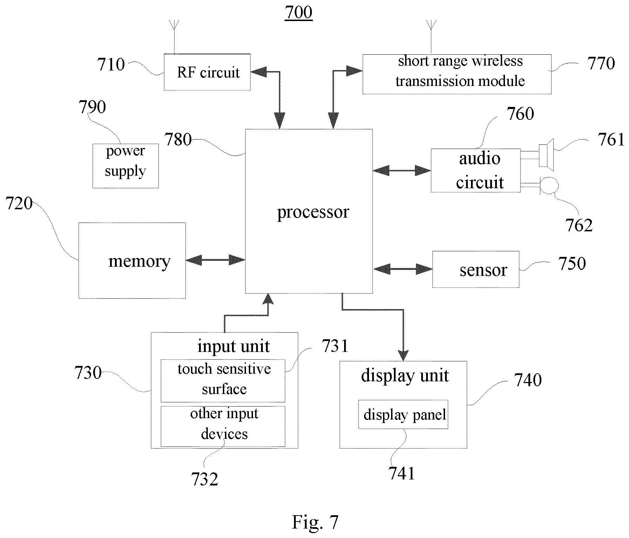

Referring to Fig. 7, which illustrates a structural diagram of the mobile terminal provided by one embodiment of the present disclosure, the mobile terminal is used to implement the methods for controlling turn-on and turn-off of the wireless network provided by the above embodiments.

The mobile terminal 700 may include a RF (Radio Frequency) circuit 710, a memory 720 including one or more computer-readable storage mediums, an input unit 730, a display unit 740, a sensor 750, an audio circuit 760, a short range wireless transmission module 770, a processor 780 including one or more processing cores, a power supply 790 and other components. The person skilled in the art could appreciate that the structure of the mobile terminal shown in Fig. 7 does not constitute the limitation to the mobile terminal, but may include more or fewer components than those shown in the drawing, or may combine some of the components, or may have different arrangement of the components.

The RF circuit 710 is configured to receive and transmit signals during information receipt and transmission or during a call. Specifically, after receiving the downlink information from the base station, the one or more processors 780 processes the downlink information; additionally, the uplink data is transmitted to the base station. Generally, the RF circuit 710 includes but not limited to an antenna, at least one amplifier, a tuner, one or more oscillators, a subscriber identity module (SIM) card, a transceiver, a coupler, a LNA (Low Noise Amplifier), a duplexer, etc. Additionally, the RF circuit 710 may also communicate with network and other devices via wireless communication. The wireless communication may adopt any communication standards or protocols, including but not limited to GSM (Global System of Mobile communication), GPRS (General Packet Radio Service), CDMA (Code Division Multiple Access), WCDMA (Wideband Code Division Multiple Access), LTE (Long Term Evolution), E-mail, SMS (Short Messaging Service), etc. The memory 720 may be configured to store software programs and modules, for example, the memory 720 may be configured to store a predefined time list, or may be configured to store the software program for sampling the voice signal, the software program for recognizing keywords, the software program for recognizing a continuous speech, the software program for setting reminding items, and the like. The processor 780 performs various functional applications and data processing by executing the software programs and modules stored in the memory 720, such as the function of "detecting whether the operating parameter satisfies the predetermined switching condition", the function of "controlling the wireless access device to turn on or turn off the wireless network if the detection result is that the operating parameter satisfies the predetermined switching condition", and the like. The memory 720 may mainly include a program storage region and a data storage region, wherein the program storage region may store an operation system, an application program required by at least one function (such as an audio playing function, an image playback function) and the like; and the data storage region may store the data created according to the usage of the mobile terminal 700 (such as audio data, a phone book) and the like. In addition, the memory 720 may include a high-speed random access memory, and may also include a non-transitory memory, such as at least one disc storage device, flash device or other transitory solid-state storage device. Accordingly, the memory 720 may also include a memory controller for providing the processor 780 and the input unit 730 with an access to the memory 720.

The input unit 730 may be configured to receive the input digits or character information, and generate signal inputs of a keyboard, a mouse, a joystick, an optics or a trackball related to the user settings and function control. For example, the input unit 730 may include a touch sensitive surface 731 and other input devices 732. The touch sensitive surface 731, which is also referred to as a touch screen or a touch pad, can collect the user's touch operation thereon or thereabout (for example, the user performs operations on the touch sensitive surface 731 or near the touch sensitive surface 731 by using fingers, a stylus, or any suitable object or accessory), and drive the corresponding connected device according to the preset program. Optionally, the touch sensitive surface 731 may include two parts, i.e., a touch detection device and a touch controller, wherein the touch detection device detects a touch orientation of the user and signals caused by the touch operation, and transmits the signals to the touch controller; and the touch controller receives the touch information from the touch detection device, converts the touch information into a contact coordinate and transmits it to the processor 780, and the touch controller can also receive the instruction from the processor 780 and execute the instruction. Additionally, the touch sensitive surface 731 may be achieved by adopting various types, such as a resistive type, a capacitive type, an infrared ray type, and a surface acoustic wave type. Besides the touch sensitive surface 731, the input unit 730 may also include other input device 732. For example, the other input device 732 may include but not limited to one or more of a physical keyboard, a function key (such as a volume control key, a switch key), a trackball, a mouse and a joystick.

The display unit 740 may be configured to display information input by the user or information provided to the user and various kinds of graphical user interfaces of the mobile terminal 700, and the graphical user interfaces may be constituted by a graphic, a text, an icon, a video and any combination thereof. The display unit 740 may include a display panel 741. Optionally, the display panel 741 may be configured in the form of a LCD (Liquid Crystal Display), an OLED (Organic Light-Emitting Diode) and the like. Further, the touch sensitive surface 731 may cover the display panel 741. When the touch operation on or near the touch sensitive surface 731 is detected, the touch sensitive surface 731 transmits the touch operation to the processor 780 to determine the type of the touch event, and then the processor 780 provides a corresponding visual output on the display panel 741 according to the type of the touch event. Although in Fig. 7, the touch sensitive surface 731 and the display panel 741 act as two independent components to achieve input and output functions, in some embodiments, the touch sensitive surface 731 and the display panel 741 may be integrated to achieve the input and output functions.

The mobile terminal 700 may further include at least one sensor 750 such as an optical sensor, a motion sensor and other sensors. For example, the optical sensor may include an ambient light sensor and a proximity sensor, wherein the ambient light sensor may adjust the brightness of the display panel 741 according to the light and shade of the ambient light, and the proximity sensor may turn off the display panel 741 and/or the backlight when the mobile terminal 700 is moved to the ear. As one type of the motion sensors, the gravity acceleration sensor may detect the magnitude of the acceleration along respective directions (in general, three axes), may detect the magnitude and direction of the gravity when being stationary, and may be used in the applications which identify the attitudes of the mobile phone (such as a horizontal and vertical screen switching, a relevant game, a magnetometer attitude calibration) and functions relevant to vibration identification (such as a pedometer, a percussion) and the like. The mobile terminal 700 may also be configured with a gyroscope, a barometer, a hygrometer, a thermometer, an infrared sensor and other sensors, which are not repeated herein.

The audio circuit 760, a speaker 761 and a microphone 762 may provide the audio interfaces between the user and the mobile terminal 700. The audio circuit 760 may transmit an electrical signal converted from the received audio data to the speaker 761, and the speaker 761 converts the electrical signal into an acoustical signal and outputs it. On the other hand, the microphone 762 converts the collected acoustical signal into an electrical signal, the audio circuit 760 receives the electrical signal, converts it into audio data, and outputs the audio data to the processor 780 for processing, then the processed audio data is for example transmitted to another terminal via the RF circuit 710, or the audio data is output to the memory 720 for further processing. The audio circuit 760 may also include a receiver jack for providing the communication between the peripheral headphone and the mobile terminal 700.

The short range wireless transmission module 770 may be a WIFI (wireless fidelity) module, a Bluetooth module, or the like. The mobile terminal 700 may assist the user to send and receive E-mails, browse the web, access the streaming media and the like via the short range wireless transmission module 770, and provide the user with the wireless broadband Internet access. Although the short range wireless transmission module 770 is shown in Fig. 7, it may be appreciated that the wireless transmission module 770 is not a necessary constitution of the mobile terminal 700, and can be omitted according to requirements without changing the essential scope of the invention.

The processor 780 is a control center of the mobile terminal 700. The processor 780 connects respective parts of the entire terminal via various interfaces and wirings, and performs various functions of the mobile terminal 700 and processes data so as to wholly monitor the electronic device, by running or executing the software programs and/or modules within the memory 720 and calling the data stored in the memory 720. Optionally, the processor 780 may include one or more processing cores. Optionally, the processor 780 may integrate with the application processor and the modem processor, wherein the application processor mainly processes the operation system, the user interface, the application program, etc., and the modem processor mainly processes the wireless communication. It may be appreciated that the modem processor may not be integrated into the processor 780.

The mobile terminal 700 further includes a power supply 790 (such as a battery) for supplying power to respective components. In one embodiment, the power supply may be connected to the processor 780 logically via a power management system, so as to achieve the functions of a charge management, a discharge management and a power consumption management by the power management system. The power supply 790 may also include any components, such as one or more direct current or alternative current power supplies, recharging systems, power failure detection circuits, power converters or inverters, and power status indicators.

Although not shown in the drawing, the mobile terminal 700 may also include a camera, a Bluetooth module, and the like, which are not repeated herein.

The mobile terminal 700 further includes a memory and one or more programs stored in the memory. The one or more processors are configured to execute the method for controlling turn-on and turn-off of the wireless network in any of the above-mentioned embodiments.

It should be explained additionally that, in another embodiment, the wireless access device may include more or fewer components than those shown in Fig. 7, or may combine some of the components, or may have different arrangement of the components for achieving all or a part of functions.

Additionally, the method according to the present disclosure may be implemented as the computer program executed by CPU, and the computer program may be stored in the computer-readable storage medium. When the computer program is executed by the CPU, the above functions defined in the method of the present disclosure are performed.

Furthermore, the above steps in the method and the units in the system may also be realized by using the controller and the computer-readable storage medium which stores the computer program for causing the controller to achieve the above steps or unit functions.

Moreover, it should be understood that the computer-readable storage medium (such as the memory) described in the present disclosure may be a transitory or non-transitory memory, or a combination thereof. As an example and not restrictive, the non-transitory memory may include a read-only memory (ROM), a programmable ROM (PROM), an electrically programmable ROM (EPROM), an electrically erasable programmable ROM (EEPROM), or a flash memory. The transitory memory may include a random access memory (RAM) which can act as an external cache memory. As an example and not restrictive, RAM may be obtained in various forms, such as a synchronous RAM (DRAM), a dynamic RAM (DRAM), a synchronous DRAM (SDRAM), a double data rate SDRAM (DDR SDRAM), an enhanced SDRAM (ESDRAM), a synchronization link DRAM (SLDRAM), and a direct RambusRAM (DRRAM). The storage devices in the aspects of the present disclosure are intended to include, but not limited to, these and any other suitable types of memory.

The person skilled in the art should also understand that the various illustrative logical blocks, modules, circuits and algorithm steps described in combination with the contents disclosed herein may be implemented as an electronic hardware, computer software or a combination thereof. In order to clearly explain the interchangeability between the hardware and the software, a general description has been given in terms of the functions of various illustrative components, blocks, modules, circuits and steps. These functions are implemented as the software or implemented as the hardware depending on the particular applications and the design constraints imposed to the whole system. The person skilled in the art may realize these functions in various manners with respect to each kind of particular application, but this realization should not be interpreted as departing from the scope of the present disclosure.

The various illustrative logical blocks, modules and circuits described in combination with the contents disclosed herein may be realized or executed by the following components which are designed for executing the above functions: a general purpose processor, a digital signal processor (DSP), an application specific IC (ASIC), a field programmable gate array (FPGA), or other programmable logic devices, a discrete gate, or a transistor logic, a discrete hardware element or any combination thereof. The general purpose processor may be a microprocessor. Alternatively, the processor may be any conventional processor, controller, microcontroller or state machine. The processor may also be implemented as a combination of the computing devices, such as a combination of a DSP and a microprocessor, a plurality of microprocessors, one or more microprocessor combined with a DSP core, or any other such configurations.

The steps of the method or algorithm described in combination with the contents disclosed herein may be directly included in the hardware, in the software module executed by the processor, or in a combination thereof. The software module may reside in a RAM, a flash memory, a ROM, an EPROM, an EEPROM, a register, a hard disk, a removable disk, a CD-ROM, or any other storage mediums of any forms known in the art. The exemplary storage medium is coupled to the processor such that the processor can read information from the storage medium or write information into the storage medium. In an alternative solution, the storage medium may be integrated to the processor. The processor and the storage medium may reside in an ASIC. The ASIC may reside in a user terminal. In an alternative solution, the processor and the storage medium may reside in the user terminal as discrete components.

In one or more exemplary designs, the functions may be implemented in hardware, software, firmware, or any combination thereof. If the functions are implemented in software, the functions may be stored in the computer-readable storage medium or may be transmitted by the computer-readable medium as one or more instructions or codes. The computer-readable medium includes a computer storage medium and a communication medium, and the communication medium includes any medium assisting the transmission of the computer program from one place to another place. The storage medium may be any available medium which is able to be accessed by a general purpose or special purpose computer. As an example and not restrictive, the computer-readable medium may include a RAM, a ROM, an EEPROM, a CD-ROM or other optical disc storage devices, magnetic disc storage devices or other magnetic storage devices, or may be any other media which are used to carry or store the desired program codes in the form of instructions or data structures and can be accessed by a general purpose or special purpose computer or a general purpose or special purpose processor. Also, any linking may be properly referred to as the computer-readable medium. For example, if sending the software from a website, a server, or other remote sources by a coaxial cable, a fiber optic cable, a twisted pair, a digital subscriber line (DSL), or a wireless technology such as an infrared, a radio and a microwave technologies, the above coaxial cable, fiber optic cable, twisted pair, DSL, or wireless technology such as the infrared, the radio and the microwave technologies are included in the definition of the media. As used herein, the magnetic disc and the optical disc include a compact disc (CD), a laser disc, an optical disc, a digital versatile disc (DVD), a floppy disc and a blu-ray disc, wherein the magnetic disc usually reproduces data magnetically, while the optical disc reproduces data optically with lasers. The combinations of the above contents should also be included within the scope of the computer-readable medium.

Although the exemplary embodiments of the present disclosure are illustrated in the above contents, it should be noted that various changes and modifications may be made to the disclosed exemplary embodiments without departing from the scope of the present disclosure as defined in the claims. The functions, steps and/or actions in the method claims according to the disclosed embodiments described herein need not be performed in any specific order. In addition, although the elements of the present disclosure may be described or claimed in the individual form, they can also be conceived to be plural unless they are explicitly restricted to be singular.

The person skilled in the art can understand that the whole or part of the steps for achieving the above-described embodiments can be accomplished by hardware, or by a program instructing relevant hardware, the program may be stored in a computer readable storage medium, and the above-mentioned storage medium may be a read-only memory, a magnetic disc or an optical disc, etc.

The above contents are only preferred embodiments of the present disclosure, but are not intended to limit the present disclosure.

## Claims

1. A method for controlling turn-on and turn-off of a wireless local area network, the method comprising:
acquiring (202, 301) an operating parameter of the wireless network provided by a wireless access device;
determining (204, 302) whether the operating parameter satisfies a predetermined switching condition; and
controlling (206, 303) the wireless access device to turn on or turn off the wireless network if it is determined that the operating parameter satisfies the predetermined switching condition;
wherein determining whether the operating parameter satisfies the predetermined switching condition comprises:
determining whether a current running time length of the wireless network reaches a predefined turn-off time length, if the operating parameter is the current running time length;
determining whether a current turn-off time length of the wireless network reaches a predefined turn-on time length, if the operating parameter is the current turn-off time length;
determining whether a current running time of the wireless network is the same as a predefined turn-off time, if the operating parameter is the current running time;
determining whether a current turn-off time of the wireless network is the same as a predefined turn-on time, if the operating parameter is the current turn-off time;
determining whether a total data flow rate value of the wireless network within a predetermined time period reaches a data flow rate turn-off threshold value, if the operating parameter is the total data flow rate value;
determining whether a total power consumption value of the wireless network within a predetermined time period reaches a power consumption turn-off threshold value, if the operating parameter is the total power consumption value; and
determining whether an instantaneous data flow rate value of the wireless network within a predetermined time period is continuously smaller than an instantaneous turn-off threshold value, if the operating parameter is the instantaneous data flow rate value;
**characterised in that** the method is performed by a mobile terminal that can directly communicate with the wireless access device via the wireless network when the wireless network is turned on, and can communicate with the wireless access device via a different network when the wireless network is turned off, and:
acquiring the operating parameter of the wireless network provided by the wireless access device comprises receiving the operating parameter of the wireless network sent by the wireless access device; and
controlling the wireless access device to turn on or turn off the wireless network comprises sending a turn-on or turn-off command to the wireless access device, the turn-on command being configured to trigger the wireless access device to turn on the wireless network, and the turn-off command being configured to trigger the wireless access device to turn off the wireless network.

2. The method according to claim 1, wherein controlling the wireless access device to turn off the wireless network further comprises:
detecting whether there is still a mobile terminal connected with the wireless access device via the wireless network every predetermined time interval, when it is determined that the operating parameter satisfies a turn-off condition in the predetermined switching condition; and
controlling the wireless access device to turn off the wireless network and to be shut down, when it is detected that there is no mobile terminal connected with the wireless access device.

3. A mobile terminal (700) for controlling turn-on and turn-off of a wireless local area network, the mobile terminal being configured to directly communicate with the wireless access device via the wireless network when the wireless network is turned on, and to communicate with the wireless access device via a different network when the wireless network is turned off, the mobile terminal comprising:
a parameter acquiring module (520, 620) configured to acquire an operating parameter of the wireless network provided by a wireless access device;
a condition determination module (540, 640) configured to determine whether the operating parameter satisfies a predetermined switching condition; and
a switching control module (560, 660) configured to control the wireless access device to turn on or turn off the wireless network if it is determined that the operating parameter satisfies the predetermined switching condition;.
wherein the condition determination module comprises at least one of a first determination unit, a second determination unit, a third determination unit, a fourth determination unit, a fifth determination unit, a sixth determination unit and a seventh determination unit, wherein:
the first determination unit is configured to determine whether a current running time length of the wireless network reaches a predefined turn-off time length, if the operating parameter is the current running time length;
the second determination unit is configured to determine whether a current turn-off time length of the wireless network reaches a predefined turn-on time length, if the operating parameter is the current turn-off time length;
the third determination unit is configured to determine whether a current running time of the wireless network is the same as a predefined turn-off time, if the operating parameter is the current running time;
the fourth determination unit is configured to determine whether a current turn-off time of the wireless network is the same as a predefined turn-on time, if the operating parameter is the current turn-off time;
the fifth determination unit is configured to determine whether a total data flow rate value of the wireless network within a predetermined time period reaches a data flow rate turn-off threshold value, if the operating parameter is the data total flow rate value;
the sixth determination unit is configured to determine whether a total power consumption value of the wireless network within a predetermined time period reaches a power consumption turn-off threshold value, if the operating parameter is the total power consumption value; and
the seventh determination unit is configured to determine whether an instantaneous dataflow rate value of the wireless network within a predetermined time period is continuously smaller than an instantaneous turn-off threshold value, if the operating parameter is the instantaneous data flow rate value; and
wherein the parameter acquiring module is configured to receive the operating parameter of the wireless network sent by the wireless access device; and
wherein the switching control module is configured to send a turn-on or turn-off command to the wireless access device, the turn-on command being configured to trigger the wireless access device to turn on the wireless network, and the turn-off command being configured to trigger the wireless access device to turn off the wireless network.

4. The mobile terminal (700) according to claim 3, wherein the switching control module comprises:
a connectivity detection unit configured to detect whether there is still a mobile terminal connected with the wireless access device via the wireless network every predetermined time interval, when it is determined that the operating parameter satisfies a turn-off condition in the predetermined switching condition; and
a shut-down control unit configured to control the wireless access device to turn off the wireless network and to be shut down, when it is detected that there is no mobile terminal connected with the wireless access device.

5. The mobile terminal (700) according to claim 3, wherein the mobile terminal comprises:
one or more processors (780);
a memory (720); and
the modules are software modules stored in the memory and being configured to be executed by the one or more processors.

6. A system for controlling turn-on and turn-off of a wireless network, the system comprising at least one mobile terminal according to any of claims 3, 4 or 5 and at least one wireless access device.

7. A computer program product having stored therein instructions that, when executed by one or more processors of a mobile terminal cause the mobile terminal to perform the steps of any of claims 1 or 2.

## Patentansprüche

1. Verfahren zum Steuern des Einschaltens und Ausschaltens eines drahtlosen lokalen Netzwerks, wobei das Verfahren Folgendes aufweist:
Erfassen (202, 301) eines Betriebsparameters des drahtlosen Netzwerks, der von einer drahtlosen Zugangsvorrichtung bereitgestellt wird,
Bestimmen (204, 302), ob der Betriebsparameter eine vorbestimmte Schaltbedingung erfüllt; und
Steuern (206, 303) der drahtlosen Zugangsvorrichtung zum Ein- oder Ausschalten des drahtlosen Netzwerks, wenn bestimmt wird, dass der Betriebsparameter die vorbestimmte Schaltbedingung erfüllt;
wobei das Bestimmen, ob der Betriebsparameter die vorbestimmte Schaltbedingung erfüllt, Folgendes aufweist:
Bestimmen, ob eine aktuelle Laufzeitlänge des drahtlosen Netzwerks eine vordefinierte Ausschaltzeitlänge erreicht, wenn der Betriebsparameter die aktuelle Laufzeitlänge ist;
Bestimmen, ob eine aktuelle Ausschaltzeitlänge des drahtlosen Netzwerks eine vordefinierte Einschaltzeitlänge erreicht, wenn der Betriebsparameter die aktuelle Ausschaltzeitlänge ist;
Bestimmen, ob eine aktuelle Laufzeit des drahtlosen Netzwerks dieselbe wie eine vordefinierte Ausschaltzeit ist, wenn der Betriebsparameter die aktuelle Laufzeit ist;
Bestimmen, ob eine aktuelle Ausschaltzeit des drahtlosen Netzwerks dieselbe wie eine vordefinierte Einschaltzeit ist, wenn der Betriebsparameter die aktuelle Ausschaltzeit ist;
Bestimmen, ob ein Gesamtwert der Datenflussrate des drahtlosen Netzwerks innerhalb einer vorbestimmten Zeitspanne einen Datenflussraten-Ausschaltschwellenwert erreicht, wenn der Betriebsparameter der Gesamtwert der Datenflussrate ist;
Bestimmen, ob ein Gesamtenergieverbrauchswert des drahtlosen Netzwerks innerhalb einer vorbestimmten Zeitspanne einen Energieverbrauch-Ausschaltschwellenwert erreicht, wenn der Betriebsparameter der Gesamtenergieverbrauchswert ist; und
Bestimmen, ob ein Istwert der Datenflussrate des drahtlosen Netzwerks innerhalb einer vorbestimmten Zeitspanne kontinuierlich kleiner als ein Ausschaltschwellen-Istwert ist, wenn der Betriebsparameter der Datenflussraten-Istwert ist;
**dadurch gekennzeichnet, dass**
das Verfahren von einem mobilen Endgerät durchgeführt wird, das über das drahtlose Netzwerk direkt mit der drahtlosen Zugangsvorrichtung kommunizieren kann, wenn das drahtlose Netzwerk eingeschaltet ist, und über ein anderes Netzwerk mit der drahtlosen Zugangsvorrichtung kommunizieren kann, wenn das drahtlose Netzwerk ausgeschaltet ist, und:
das Erfassen des Betriebsparameters des drahtlosen Netzwerks, der von der drahtlosen Zugangsvorrichtung bereitgestellt wird, das Empfangen des von der drahtlosen Zugangsvorrichtung gesendeten Betriebsparameters des drahtlosen Netzwerks aufweist und
das Steuern der drahtlosen Zugangsvorrichtung zum Einschalten oder Ausschalten des drahtlosen Netzwerks das Senden eines Einschalt- oder Ausschaltbefehls an die drahtlose Zugangsvorrichtung aufweist, wobei der Einschaltbefehl konfiguriert ist, um die drahtlose Zugangsvorrichtung zum Einschalten der drahtlosen Zugangsvorrichtung auszulösen, und der Ausschaltbefehl konfiguriert ist, um die drahtlose Zugangsvorrichtung zum Ausschalten des drahtlosen Netzwerks auszulösen.

2. Verfahren nach Anspruch 1, bei dem das Steuern der drahtlosen Zugangsvorrichtung zum Ausschalten des drahtlosen Netzwerks ferner Folgendes aufweist:
in jedem vorbestimmten Zeitintervall Erkennen, ob noch ein mobiles Endgerät über das drahtlose Netzwerk mit der drahtlosen Zugangsvorrichtung verbunden ist, wenn bestimmt wird, dass der Betriebsparameter eine Ausschaltbedingung in der vorbestimmten Schaltbedingung erfüllt; und
Steuern der drahtlosen Zugangsvorrichtung zum Ausschalten des drahtlosen Netzwerks und zum Abschalten, wenn erkannt wird, dass kein mobiles Endgerät mit der drahtlosen Zugangsvorrichtung verbunden ist.

3. Mobiles Endgerät (700) zum Steuern des Einschaltens und Ausschaltens eines drahtlosen lokalen Netzwerks, wobei das mobile Endgerät konfiguriert ist, um über das drahtlose Netzwerk direkt mit der drahtlosen Zugangsvorrichtung zu kommunizieren, wenn das drahtlose Netzwerk eingeschaltet ist, und um über ein anderes Netzwerk mit der drahtlosen Zugangsvorrichtung zu kommunizieren, wenn das drahtlose Netzwerk ausgeschaltet ist, wobei das mobile Endgerät Folgendes aufweist:
ein Parametererfassungsmodul (520, 620), das zum Erfassen eines Betriebsparameters des drahtlosen Netzwerks, der von einer drahtlosen Zugangsvorrichtung bereitgestellt wird, konfiguriert ist;
ein Bedingungsbestimmungsmodul (540, 640), das zum Bestimmen, ob der Betriebsparameter eine vorbestimmte Schaltbedingung erfüllt, konfiguriert ist; und
ein Schaltsteuermodul (560, 660), das zum Steuern der drahtlosen Zugangsvorrichtung zum Ein- oder Ausschalten des drahtlosen Netzwerks, wenn bestimmt wird, dass der Betriebsparameter die vorbestimmte Schaltbedingung erfüllt, konfiguriert ist;
wobei das Bedingungsbestimmungsmodul wenigstens eine von einer ersten Bestimmungseinheit, einer zweiten Bestimmungseinheit, einer dritten Bestimmungseinheit, einer vierten Bestimmungseinheit, einer fünften Bestimmungseinheit, einer sechsten Bestimmungseinheit und einer siebten Bestimmungseinheit aufweist, wobei:
die erste Bestimmungseinheit zum Bestimmen, ob eine aktuelle Laufzeitlänge des drahtlosen Netzwerks eine vordefinierte Ausschaltzeitlänge erreicht, wenn der Betriebsparameter die aktuelle Laufzeitlänge ist, konfiguriert ist;
die zweite Bestimmungseinheit zum Bestimmen, ob eine aktuelle Ausschaltzeitlänge des drahtlosen Netzwerks eine vordefinierte Einschaltzeitlänge erreicht, wenn der Betriebsparameter die aktuelle Ausschaltzeitlänge ist, konfiguriert ist;
die dritte Bestimmungseinheit zum Bestimmen, ob eine aktuelle Laufzeit des drahtlosen Netzwerks dieselbe wie eine vordefinierte Ausschaltzeit ist, wenn der Betriebsparameter die aktuelle Laufzeit ist, konfiguriert ist;
die vierte Bestimmungseinheit zum Bestimmen, ob eine aktuelle Ausschaltzeit des drahtlosen Netzwerks dieselbe wie eine vordefinierte Einschaltzeit ist, wenn der Betriebsparameter die aktuelle Ausschaltzeit ist, konfiguriert ist;
die fünfte Bestimmungseinheit zum Bestimmen, ob ein Gesamtwert der Datenflussrate des drahtlosen Netzwerks innerhalb einer vorbestimmten Zeitspanne einen Datenflussraten-Ausschaltschwellenwert erreicht, wenn der Betriebsparameter der Gesamtwert der Datenflussrate ist, konfiguriert ist;
die sechste Bestimmungseinheit zum Bestimmen, ob ein Gesamtenergieverbrauchswert des drahtlosen Netzwerks innerhalb einer vorbestimmten Zeitspanne einen Energieverbrauch-Ausschaltschwellenwert erreicht, wenn der Betriebsparameter der Gesamtenergieverbrauchswert ist, konfiguriert ist; und
die siebte Bestimmungseinheit zum Bestimmen, ob ein Istwert der Datenflussrate des drahtlosen Netzwerks innerhalb einer vorbestimmten Zeitspanne kontinuierlich kleiner als ein Ausschaltschwellen-Istwert ist, wenn der Betriebsparameter der Datenflussraten-Istwert ist, konfiguriert ist; und
wobei das Parametererfassungsmodul zum Empfangen des von der drahtlosen Zugangsvorrichtung gesendeten Betriebsparameters des mobilen Netzwerks konfiguriert ist und
wobei das Schaltsteuermodul zum Senden eines Einschalt- oder Ausschaltbefehls an die drahtlose Zugangsvorrichtung konfiguriert ist, wobei der Einschaltbefehl konfiguriert ist, um die drahtlose Zugangsvorrichtung zum Einschalten des drahtlosen Netzwerks auszulösen, und der Ausschaltbefehl konfiguriert ist, um die drahtlose Zugangsvorrichtung zum Ausschalten des drahtlosen Netzwerks auszulösen.

4. Mobiles Endgerät (700) nach Anspruch 3, wobei das Schaltsteuermodul Folgendes aufweist:
eine Konnektivitätserkennungseinheit, die zum Erkennen in jedem vorbestimmten Zeitintervall, ob noch ein mobiles Endgerät über das drahtlose Netzwerk mit der drahtlosen Zugangsvorrichtung verbunden ist, wenn bestimmt wird, dass der Betriebsparameter eine Ausschaltbedingung in der vorbestimmten Schaltbedingung erfüllt, konfiguriert ist; und
eine Abschaltsteuereinheit, die zum Steuern der drahtlosen Zugangsvorrichtung zum Ausschalten des drahtlosen Netzwerks und zum Abgeschaltetwerden, wenn erkannt wird, dass kein mobiles Endgerät mit der drahtlosen Zugangsvorrichtung verbunden ist, konfiguriert ist.

5. Mobiles Endgerät (700) nach Anspruch 3, wobei das mobile Endgerät Folgendes aufweist:
einen oder mehr Prozessoren (780);
einen Speicher (720); und
die Module Softwaremodule sind, die im Speicher gespeichert sind und konfiguriert sind, um von dem einen oder den mehr Prozessoren ausgeführt zu werden.

6. System zum Steuern des Einschaltens und Ausschaltens eines drahtlosen Netzwerks, wobei das System wenigstens ein mobiles Endgerät nach einem der Ansprüche 3, 4 oder 5 und wenigstens eine drahtlose Zugangsvorrichtung aufweist.

7. Computerprogrammprodukt, in dem Anweisungen gespeichert sind, die bei Ausführung durch einen oder mehr Prozessoren eines mobilen Endgeräts das mobile Endgerät zum Durchführen der Schritte nach einem der Ansprüche 1 oder 2 veranlassen.

## Revendications

1. Procédé de commande de la mise en marche et de l'arrêt d'un réseau local sans fil, le procédé comprenant :
l'acquisition (202, 301) d'un paramètre opérationnel du réseau sans fil fourni par un dispositif d'accès sans fil ;
la détermination (204, 302) que le paramètre opérationnel satisfait ou non une condition de commutation prédéterminée ; et
la commande (206, 303) du dispositif d'accès sans fil pour mettre en marche ou arrêter le réseau sans fil s'il est déterminé que le paramètre opérationnel satisfait la condition de commutation prédéterminée ;
dans lequel la détermination que le paramètre opérationnel satisfait ou non la condition de commutation prédéterminée comprend :
la détermination qu'une durée d'exécution actuelle du réseau sans fil atteint ou non une durée d'arrêt prédéfinie, si le paramètre opérationnel est la durée d'exécution actuelle ;
la détermination qu'une durée d'arrêt actuelle du réseau sans fil atteint ou non une durée de mise en marche prédéfinie, si le paramètre opérationnel est la durée d'arrêt actuelle ;
la détermination qu'un temps d'exécution actuel du réseau sans fil est ou non identique à un temps d'arrêt prédéfini, si le paramètre opérationnel est le temps d'exécution actuelle ;
la détermination qu'un temps d'arrêt actuel du réseau sans fil est ou non identique à un temps de mise en marche prédéfini, si le paramètre opérationnel est le temps d'arrêt actuel ;
la détermination qu'une valeur de débit de données total du réseau sans fil dans une période de temps prédéterminée atteint ou non une valeur limite d'arrêt de débit de données, si le paramètre opérationnel est la valeur de débit de données total ;
la détermination qu'une valeur de consommation de puissance totale du réseau sans fil dans une période de temps prédéterminée atteint ou non une valeur limite d'arrêt de consommation de puissance, si le paramètre opérationnel est la valeur de consommation de puissance totale ; et
la détermination qu'une valeur de débit de données instantané du réseau sans fil dans une période de temps prédéterminée est ou non continuellement inférieure à une valeur limite d'arrêt instantané, si le paramètre opérationnel est la valeur de débit de données instantané ;
**caractérisé en ce que**
le procédé est exécuté par un terminal mobile pouvant communiquer directement avec le dispositif d'accès sans fil par l'intermédiaire du réseau sans fil quand le réseau sans fil est mis en marche, et pouvant communiquer avec le dispositif d'accès sans fil par l'intermédiaire d'un réseau différent quand le réseau sans fil est arrêté, et :
l'acquisition du paramètre opérationnel du réseau sans fil fourni par le dispositif d'accès sans fil comprend la réception du paramètre opérationnel du réseau sans fil envoyé par le dispositif d'accès sans fil ; et
la commande du dispositif d'accès sans fil pour mettre en marche ou arrêter le réseau sans fil comprend l'envoi d'une commande de mise en marche ou d'arrêt d'accès sans fil, la commande de mise en marche étant configurée pour déclencher le dispositif d'accès sans fil afin de mettre en marche le réseau sans fil, et la commande d'arrêt étant configurée pour déclencher le dispositif d'accès sans fil pour arrêter le réseau sans fil.

2. Procédé selon la revendication 1, dans lequel la commande du dispositif d'accès sans fil pour arrêter le réseau sans fil comprend en outre :
la détection qu'un terminal mobile est toujours connecté ou non au dispositif d'accès sans fil par l'intermédiaire du réseau sans fil à chaque intervalle de temps prédéterminé, quand il est déterminé que le paramètre opérationnel satisfait une condition d'arrêt dans la condition de commutation prédéterminée ; et
la commande du dispositif d'accès sans fil pour arrêter le réseau sans fil et pour le désactiver, quand il est détecté qu'aucun terminal mobile n'est connecté au dispositif d'accès sans fil.

3. Terminal mobile (700) pour commander la mise en marche et l'arrêt d'un réseau local sans fil, le terminal mobile étant configuré pour communiquer directement avec le dispositif d'accès sans fil par l'intermédiaire du réseau sans fil quand le réseau sans fil est mis en marche, et pour communiquer avec le dispositif d'accès sans fil par l'intermédiaire d'un réseau différent quand le réseau sans fil est arrêté, le terminal mobile comprenant :
un module d'acquisition de paramètre (520, 620) configuré pour acquérir un paramètre opérationnel du réseau sans fil fourni par un dispositif d'accès sans fil ;
un module de détermination de condition (540, 640) configuré pour déterminer que le paramètre opérationnel satisfait ou non une condition de commutation prédéterminée ; et
un module de commande de commutation (560, 660) configuré pour commander le dispositif d'accès sans fil pour mettre en marche ou arrêter le réseau sans fil s'il est déterminé que le paramètre opérationnel satisfait la condition de commutation prédéterminée ;
dans lequel le module de détermination de condition comprend au moins l'une d'une première unité de détermination, d'une deuxième unité de détermination, d'une troisième unité de détermination, d'une quatrième unité de détermination, d'une cinquième unité de détermination, d'une sixième unité de détermination y d'une septième unité de détermination, dans lequel :
la première unité de détermination est configurée pour déterminer qu'une durée d'exécution actuelle du réseau sans fil atteint ou non une durée d'arrêt prédéfinie, si le paramètre opérationnel est la durée d'exécution actuelle ;
la deuxième unité de détermination est configurée pour déterminer qu'une durée d'arrêt actuelle du réseau sans fil atteint ou non une durée de mise en marche prédéfinie, si le paramètre opérationnel est la durée d'arrêt actuelle ;
la troisième unité de détermination est configurée pour déterminer qu'un temps d'exécution actuel du réseau sans fil est identique ou non à un temps d'arrêt prédéfini, si le paramètre opérationnel est le temps d'exécution actuelle ;
la quatrième unité de détermination est configurée pour déterminer qu'un temps d'arrêt actuel du réseau sans fil est identique ou non à un temps de mise en marche prédéfini, si le paramètre opérationnel est le temps d'arrêt actuel ;
la cinquième unité de détermination est configurée pour déterminer qu'une valeur de débit de données total du réseau sans fil dans une période de temps prédéterminée atteint ou non une valeur limite d'arrêt de débit de données, si le paramètre opérationnel est la valeur de débit de données total ;
la sixième unité de détermination est configurée pour déterminer qu'une valeur de consommation de puissance totale du réseau sans fil dans une période de temps prédéterminée atteint ou non une valeur limite d'arrêt de consommation de puissance, si le paramètre opérationnel est la valeur de consommation de puissance totale ; et
la septième unité de détermination est configurée pour déterminer qu'une valeur de débit de données instantané du réseau sans fil dans une période de temps prédéterminée est ou non continuellement inférieure à une valeur limite d'arrêt instantané, si le paramètre opérationnel est la valeur de débit de données instantané ; et
dans lequel le module d'acquisition de paramètre est configuré pour recevoir le paramètre opérationnel du réseau sans fil envoyé par le dispositif d'accès sans fil ; et
dans lequel le module de commande de commutation est configuré pour envoyer une commande de mise en marche ou d'arrêt au dispositif d'accès sans fil, la commande de mise en marche étant configurée pour déclencher le dispositif d'accès sans fil pour mettre en marche le réseau sans fil, et la commande d'arrêt étant configurée pour déclencher le dispositif d'accès sans fil pour arrêter le réseau sans fil.

4. Terminal mobile (700) selon la revendication 7, dans lequel le module de commande de commutation comprend :
une unité de détection de connectivité configurée pour détecter qu'un terminal mobile est toujours connecté ou non au dispositif d'accès sans fil par l'intermédiaire du réseau sans fil à chaque intervalle de temps prédéterminé, quand il est déterminé que le paramètre opérationnel satisfait une condition d'arrêt dans la condition de commutation prédéterminée ; et
une unité de commande d'arrêt configurée pour commander le dispositif d'accès sans fil pour arrêter le réseau sans fil et pour le désactiver, quand il est détecté qu'aucun terminal mobile n'est connecté au dispositif d'accès sans fil.

5. Terminal mobile (700) selon la revendication 3, le terminal mobile comprenant
un ou plusieurs processeurs (780) ;
une mémoire (720) ; et
les modules sont des modules logiciels stockés dans la mémoire et configurés pour être exécutés par les un ou plusieurs processeurs.

6. Système de commande de la mise en marche et de l'arrêt d'un réseau sans fil, le système comprenant au moins un terminal mobile selon l'une quelconque des revendications 3, 4 ou 5 et au moins un dispositif d'accès sans fil.

7. Produit de programme informatique sur lequel sont mémorisées des instructions qui, à leur exécution par un ou plusieurs processeurs d'un terminal mobile, amènent le terminal mobile à exécuter les étapes selon l'une quelconque des revendications 1 ou 2.
